# EUROPEAN PATENT APPLICATION

(11) **EP 2 397 375 A1**
(43) Date of publication of application: **21.12.2011**
(21) Application number: 10251109.4
(22) Date of filing: 17.06.2010
(51) Int. Cl.: B60R 21/2165

(54) **A safety arrangement for a motor vehicle with an ornamental element**

(71) Applicant: Autoliv Development AB, 447 83 Vårgårda (SE)
(72) Inventor: Demulder, Damien, 60000 Beauvais (FR); De Oliveira, Nelson, 76600 Rouen (FR)
(74) Representative: Parry, Simon James

(57) **Abstract**

There is disclosed a safety arrangement for a motor vehicle having an airbag arranged for inflation within the interior cabin (1) of the vehicle. The safety arrangement comprises an interior trim member (8) having an aperture (14) configured to permit inflation of the airbag through the aperture, and is characterised in that the aperture (14) is closed by an ornamental element (13) provided as an adornment to the trim member (8). The aperture (14) is preferably closed solely by the ornamental element (13).

## Description

The present invention relates to a safety arrangement for a motor vehicle. More particularly, the invention relates to a safety arrangement for a motor vehicle of a type having an airbag arranged for inflation within the interior cabin of the vehicle.

It is now common for motor vehicles to be supplied with airbags for inflation within the interior cabin of the vehicle in the event of an accident in order to provide protection from injury to the driver and/or passengers of the vehicle. Typically, such airbags are provided in a tightly folded and/or rolled package behind a rupturable interior trim member. For example, in the case of a driver's airbag, the airbag is provided as part of a an airbag module within the central hub of the vehicle's steering wheel, and is covered by an airbag cover designed to blend in visually with the overall appearance of the steering wheel and the interior cabin more generally. The airbag cover is typically moulded from plastics material and incorporates a series of break lines or other formations of relative mechanical weakness, which are configured to rupture upon inflation of the airbag so as to permit the airbag to burst through the cover as it inflates in an accident situation.

Similarly, a front seat passenger airbag is typically provided as part of an airbag module within the dashboard or instrument panel of the vehicle, generally in front of the passenger seat. The airbag module is typically covered by an airbag cover which is designed to blend in visually with the overall appearance of the dashboard. For example, the airbag cover may be provided either as an integral part of the dashboard or as a separate panel, and in either case is likely to be moulded from plastics material and configured to incorporate break lines or the like as mentioned above.

It is becoming increasingly common for various surfaces within the interior cabin of motor vehicles to be adorned with decorative or ornamental trim elements. For example, steering wheel hubs are often provided with manufacturer's emblems. Vehicle dashboards, and indeed other trim members such as door trim panels, centre consoles, head-linings and the like are often also provided with ornamental trim elements such as strips or inserts in order to adorn the trim member and improve the visual appearance of the interior cabin. However, it is often the case that the desired positions for such ornamental trim elements coincide with the location of a vehicle's airbag modules. This can make it more complicated to configure the airbag covers in order to ensure safe deployment of the vehicle's airbags in the event of an accident occurring.

It is an object of the present invention to provide an improved safety arrangement for a motor vehicle.

According to the present invention, there is provided a safety arrangement for a motor vehicle having an airbag arranged for inflation within the interior cabin of the vehicle, the safety arrangement comprising an interior trim member having an aperture configured to permit inflation of the airbag through the aperture, the arrangement being characterised in that the aperture is closed by an ornamental element provided as an adornment to the trim member.

The aperture is preferably sized and configured to permit inflation of the airbag through the aperture without the aperture being deformed, damaged or enlarged.

Preferably, the aperture is closed solely by the ornamental element.

Advantageously, the ornamental element is connected to the trim member.

Conveniently, the ornamental element comprises a plurality of fixing tabs configured for engagement within respective fixing apertures or recesses provided on the trim member.

Preferably the ornamental element is fixedly connected to the trim member. Alternatively, however, the ornamental element may instead be releasably connected to the trim member.

Conveniently, the ornamental element is provided with a hinge to permit at least part of the element to open pivotally upon inflation of the airbag. The hinge may be a living hinge.

Advantageously, the ornamental element comprises a region of relative mechanical weakness which is configured to rupture upon inflation of the airbag.

Conveniently, the ornamental element has a different surface finish and/or colour to the trim member.

Preferably, the ornamental element is larger than the aperture such that it extends over at least one adjacent region of the interior trim member.

Advantageously, the safety arrangement is provided in combination with an airbag module.

Conveniently, the aperture is sized to permit insertion of the airbag module through the aperture during installation of the airbag module.

Preferably, the ornamental element is connected to the airbag module.

Conveniently, the ornamental element comprises a plurality of fixing tabs configured for engagement within respective fixing apertures or recesses provided on the airbag module.

Advantageously, the ornamental element is fixedly connected to the airbag module. Alternatively, however, the ornamental element may instead be releasably connected to the airbag module.

Preferably, the trim member forms part of the dashboard of the vehicle. However, it is to be appreciated that the trim member could instead form part of other aspects of the vehicle interior such as, for example, a centre console, a steering wheel hub or a door panel etc.

So that the invention may be more readily understood, and so that further features thereof may be appreciated, embodiments of the invention will now be described by way of example with reference to the accompanying drawings in which:
Figure 1 is a perspective view of part of a motor vehicle cabin, showing the vehicle's dashboard and steering wheel;
Figure 2 is a schematic illustration of the dashboard in plan view from above, showing the position of a passenger airbag module;
Figure 3 is a schematic illustration showing part of the dashboard, the dashboard being provided with an aperture forming part of the present invention, behind which is located a passenger airbag module;
Figure 4 is a schematic illustration showing an ornamental cover element configured to close the aperture shown in Figure 3;
Figure 5 is a side view showing the ornamental cover element in relation to the airbag module;
Figure 6 is a perspective view showing another ornamental cover element in accordance with the present invention viewed from the front as visible to the passenger of the motor vehicle;
Figure 7 is a perspective view of the ornamental cover element shown in Figure 6, but showing the element viewed from the back;
Figure 8 is a side view of the ornamental cover element of Figures 6 and 7; and
Figure 9 is a side view showing the ornamental cover element of Figures 6 to 8 in relation to the passenger airbag module.

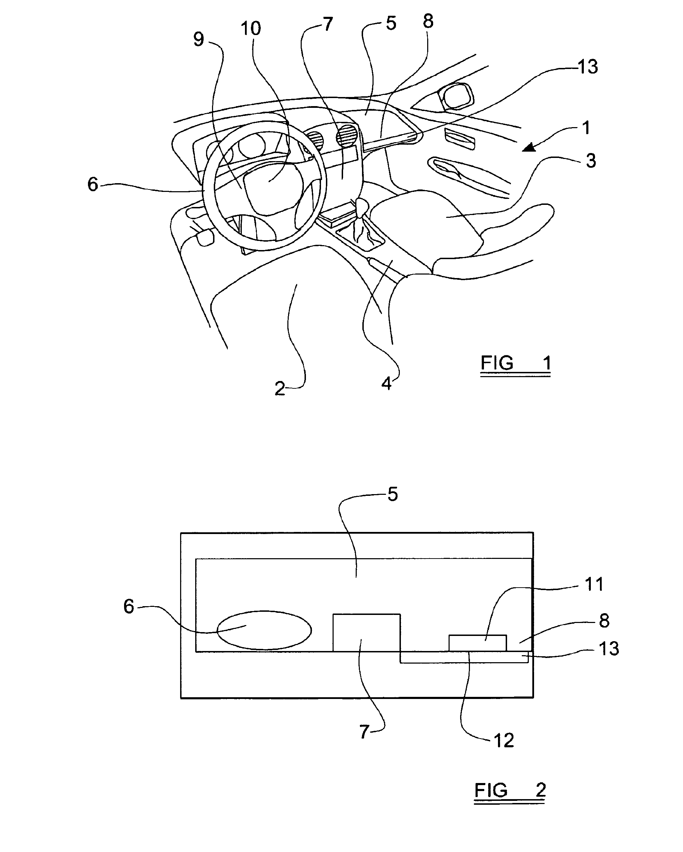

Turning now to consider Figure 1 in more detail, there is illustrated the forward part of the interior cabin 1 of a motor vehicle. The cabin comprises a front driver's seat 2 and a front passenger seat 3 arranged in side by side relation on respective sides of a central tunnel 4. A dashboard or instrument panel 5 is also provided which extends across the full width of the interior cabin 1 at a position spaced slightly in front of the seats 2, 3. A steering wheel 6 extends from the drivers side of the dashboard 5, and a central console 7 which forms part of the dashboard 5 is located generally above the central tunnel 4. As will be noted, the passenger side of the dashboard 5 defines an interior trim member 8.

In a generally conventional manner, the steering wheel 6 may be provided with a driver's airbag module mounted in the central hub 9 of the steering wheel and which is covered by an airbag cover 10. In order to provide the occupant of the front passenger seat 3 with suitable protection in the event of an accident occurring, the dashboard 5 also incorporates a passenger airbag module which is located generally behind the trim member 8.

Turning now to consider Figure 2, the dashboard 5 is illustrated schematically, with the steering wheel 6, the central console 7 and the trim member region 8 on the passenger side all illustrated. Figure 2 shows the position of a passenger side airbag module 11, which is located generally within the internal structure of the dashboard 5. More particularly, and as will be described in more detail hereinafter, the airbag module 11 is located behind an aperture 12 formed in the trim member 8, the aperture 12 being closed by an ornamental trim element 13 which is provided as an adornment to the trim member 8. In the particular arrangement illustrated, the ornamental element 13 is generally elongate in form and extends substantially the full width of the passenger side of the dashboard 5. The trim member 13 is also illustrated in Figure 1.

The ornamental element 13 is formed separately from the trim member 8 defined by the dashboard 5, and is preferably configured so as to have a different or contrasting surface finish and/or colour to the trim member 8. For example, it is envisaged that the dashboard 5 which defines the above mentioned trim member 8, may have a generally matt surface finish having a texture closely resembling that of leather or the like, whereas the trim element 13, in contrast, may have a highly polished surface finish, or a contrasting surface texture. As will be appreciated, the ornamental element 13 may be formed from any one of a number of suitable materials, but is most preferably formed from plastics material such as, for example, polypropylene, SEBS, EPDM rubber or the like, or any combination thereof. The ornamental element 13 may be formed so as to have a laminate construction comprising a plurality of layers of material, but preferably has a maximum of two layers of material. The ornamental element 13 could, for example, be constructed so as to comprise a thin top layer of leather or suitable fabric material stretched over a supporting plastic structure.

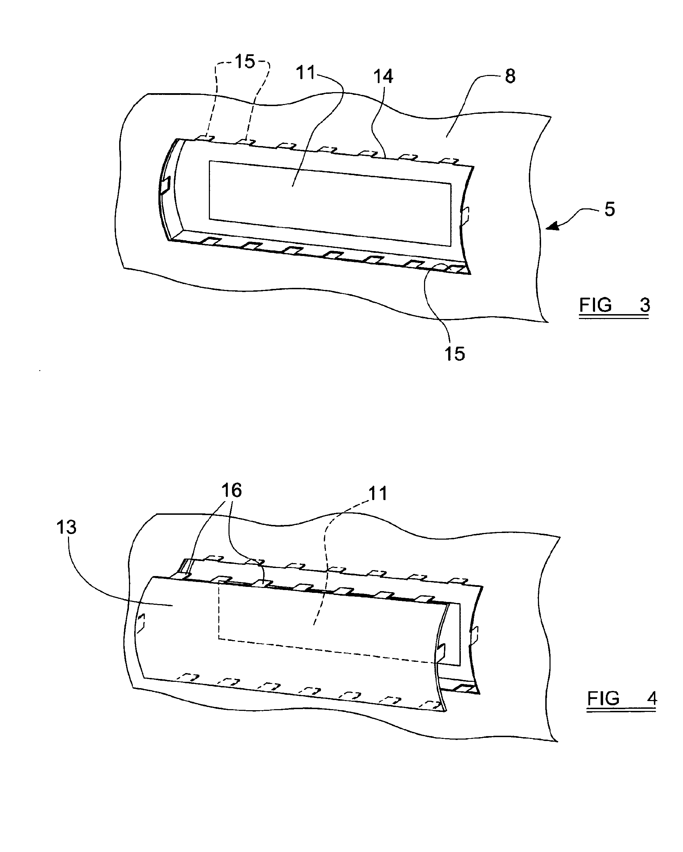

Figure 3 illustrates the passenger side of the trim member 8 defined by the dashboard 5 in more detail. As shown in Figure 3, this region of the dashboard is provided with an elongate aperture 14, behind which the airbag module 11 is located. In this regard, it should be noted that the airbag module 11 may take any convenient form, but preferably takes the form of a substantially self contained unit comprising a housing within which is located a folded airbag provided in fluid communication with a suitable inflator such as a gas generator. In preferred arrangements of the present invention, the aperture 14 is sized and configured to permit insertion of the airbag module 11 through the aperture during installation of the airbag module within the structure of the dashboard 5. It is therefore proposed that the aperture 14 will have a size which is slightly larger than the overall external dimensions of the airbag module 11.

As also illustrated in Figure 3, the trim member 8 is preferably provided with a plurality of spaced apart mounting apertures or recesses 15 around the perimeter of the main aperture 14. For example, the apertures or recesses 15 may be provided slightly inwardly of the peripheral edge of the aperture 14, slightly behind the front surface of the trim member 8.

Figure 4 illustrates the ornamental trim element 13 in more detail, and shows the trim element 13 positioned so as to cover the passenger airbag module 11, and hence substantially hide the airbag module from view by a passenger sitting in the passenger seat 3. As thus will be appreciated, the ornamental trim element 13 has a size and shape corresponding generally to that of the aperture 14 through which the airbag module 11 has been inserted. More particularly, it will be noted that the peripheral edges of the ornamental element 13 are provided with a priority of spaced apart mounting tabs 16. Each tab is arranged and configured for receipt with a corresponding mounting aperture or recess 15 provided around the periphery of the mounting aperture 14 in the trim element 8.

Following insertion of the passenger airbag module 11 through the main aperture 14 provided in the trim element 8, and also following secure mounting of the airbag module11 to the internal structure of the dashboard 5, the ornamental trim element 13 is positioned over the mounting aperture 14 in order to close the mounting aperture, and is either fixedly or realisably connected to the trim element 8, around the periphery of the mounting aperture 14, by way of cooperation between the mounting tabs 16 and the corresponding mounting apertures or recesses 15. As will thus be appreciated, the ornamental trim element 13 serves a dual function as an adornment to the trim member 8, but also as an airbag cover, covering the underlying airbag module 11.

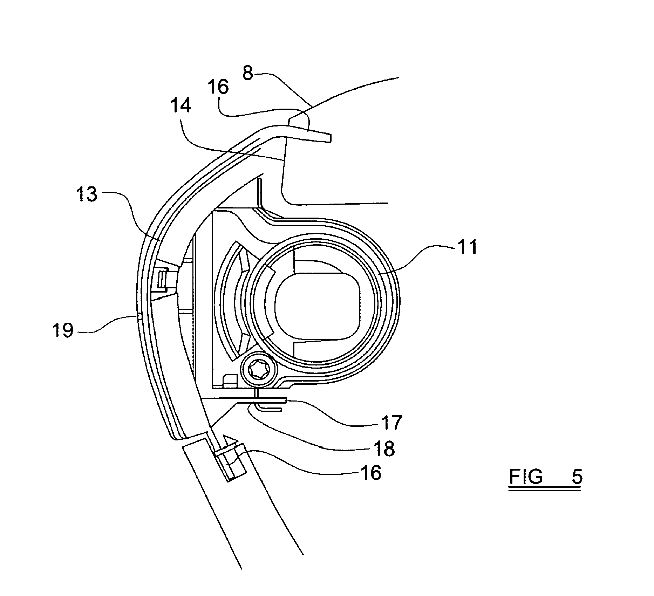

Figure 5 illustrates the ornamental element 13 from the end, and shows the ornamental element 13 provided in position over the airbag module 11 so as to close the aperture 14. As will be noted, the mounting tabs 16 are engaged within corresponding apertures of recesses 15 provided around the periphery of the aperture 14.

As also illustrated in Figure 5, the ornamental trim element 13 may be connected, either realisably or fixedly, to the airbag module 11 itself. More particularly, it will be seen from Figure 5 that the rear part of the ornamental trim element 13 is provided with a plurality of rearwardly directed fixing tabs 17, each of which is configured for engagement within a respective fixing aperture 18 formed on the casing of the airbag module 11.

The ornamental trim element 13 may be fixedly connected to the trim member 8 defined by the dashboard 5 along one of its elongate edges, for example its top edge, and may be fixedly connected to the trim member 8 along its other edge, for example its lower edge. In n such an arrangement, the trim element 13 is configured to become detached from the trim member 8 along its realisably connected edge upon deployment of the airbag, such that inflation of the airbag from behind ornamental cover element 13 causes the element to deform, in a generally pivotal manner, around its fixedly secured edge so as to permit inflation of the airbag through the aperture 14. However, in alternative arrangements, it is proposed that the ornamental element 13 may be provided with a region of relative mechanical weakness such as a break line or tear seam in which case the ornamental element 13 will be configured to rupture along the break line or tear seam upon inflation of the airbag. For example, in the arrangement illustrated in Figure 5, a longitudinal tear seam 19 is provided within the ornamental element 13, the tear seam being configured to break upon inflation of the airbag from the airbag module 11 located behind the ornamental element 13.

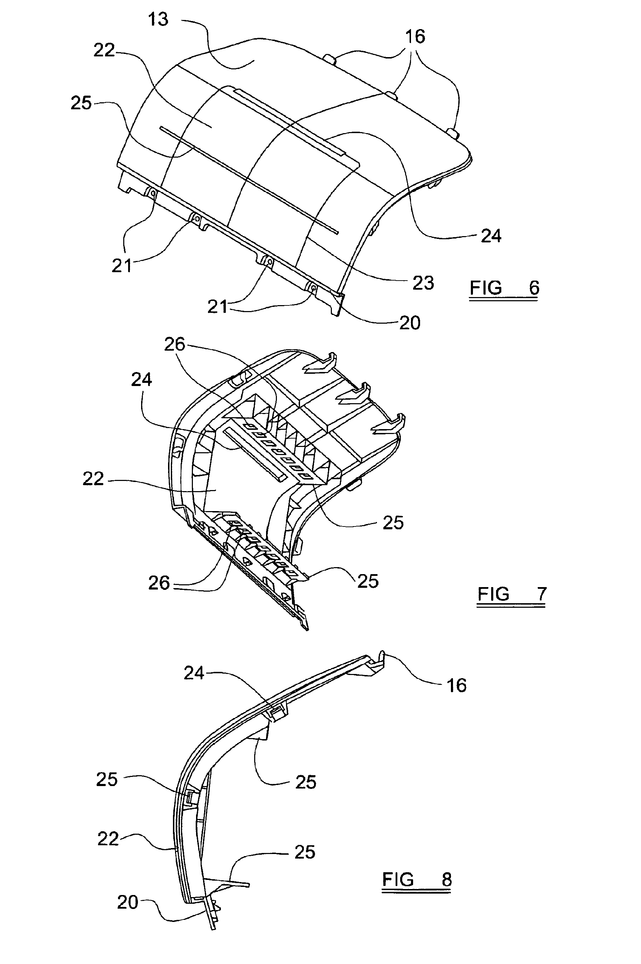

Turning now to consider Figure 6, there is illustrated another ornamental element 13 in accordance with the present invention. In this arrangement, the ornamental element 13 is again provided with a series of mounting tabs 16 along its upper edge for connection to the periphery of the aperture 14 provided within a trim member 8 defined by the dashboard of the motor vehicle. In this arrangement, the lower edge of the ornamental element is provided with a lip 20 which has a plurality of mounting recesses 21 provided at spaced apart positions along its length, each mounting recess 21 being arranged for engagement with a corresponding mounting tab provided along the lower edge of the aperture 14 in the trim member 8 (not shown).

In the arrangement illustrated in Figure 6, the ornamental element 13 is provided with a generally centrally located door region 22, which is formed as an integral part of the ornamental element 13 and which is defined by a generally peripheral tear seam 23. However, it is to be noted that the upper edge of the door region 22 is connected to the main part of the ornamental element 13 by a living hinge 24. The lower region of the door region 22 may also be connected to the remainder of the ornamental element by a living hinge, and the particular arrangement illustrated in Figure 6, an elongate tear seam 25 is provided which extends completely across the central region of the door region 22.

Figure 7 illustrates the ornamental element 13 of Figure 6 from behind, and clearly shows the upper living hinge 24, being formed as a material weakening in the structure of the ornamental element 13. Along the upper and lower edges of the door region 22, the ornamental element 13 comprises respective rearwardly directed mounting flanges 25, each of which incorporates a plurality of mounting apertures 26 for connection to the outer casing of airbag module 11.

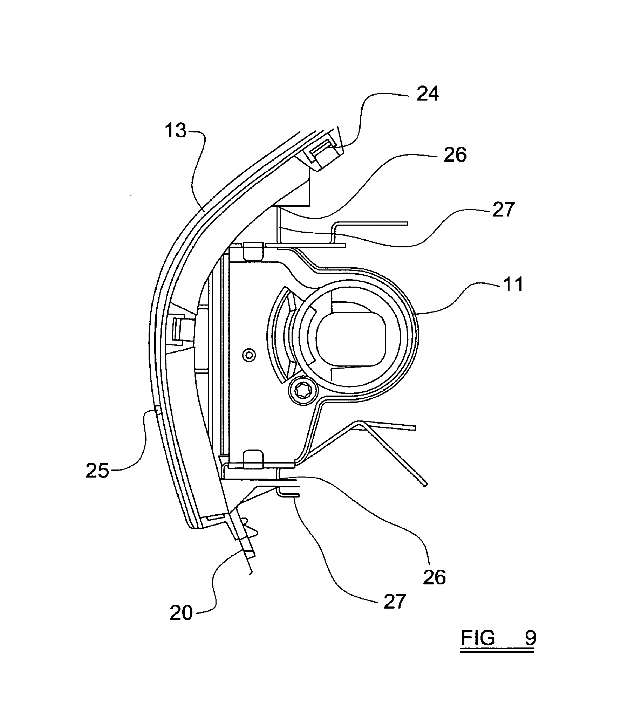

Figure 9 shows the ornamental cover element 13 connected to the airbag module 11 such that the aforementioned mounting apertures 26 are each engaged by a respective mounting tab 27 formed on the airbag module 11.

Upon inflation of the airbag from the airbag module 11, the ornamental cover element 13 is caused to rupture along its main transverse tear seam 25, such that the door region 22 opens in the form of a pair of flaps, namely an upper flap which moves pivotally about the living hinge 24 and a lower flap which moves pivotally around the lower living hinge in order to permit inflation of the airbag through the aperture 14 provided in the dashboard. It is to be noted, however, that in an alternative version of this arrangement a hinge may be formed adjacent the edges of the ornamental element 13 which are connected to the periphery of the aperture 14, rather than in a region of the ornamental element 13 which covers the aperture 14 as illustrated in Figures 6 to 9.

Whilst the present invention has been described above with reference to particular embodiments, it is to be appreciated that various modifications or alterations could be made, without departing from the scope of the claimed invention. For example, although the ornamental cover element 13 has been described above as having a size and shape corresponding generally to that of the aperture 14 formed within the trim member 8, it is envisaged that in alternative embodiments, the ornamental element 13 may be somewhat larger than the aperture 14 such that the ornamental element 13 extends over at least one adjacent region of the trim member 8.

Also, it is to be appreciated that although the invention has been described above with particular reference to arrangements in which the trim member 8 is formed as part of the dashboard of the motor vehicle, it is envisaged that in alternative arrangements the trim member 8 could represent other convenient trim members within the interior cabin of the motor vehicle such as, for example, a centre console, a central tunnel, or a door trim panel, or side trim panel of the interior cabin.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A safety arrangement for a motor vehicle having an airbag arranged for inflation within the interior cabin (1) of the vehicle, the safety arrangement comprising an interior trim member (8) having an aperture (14) configured to permit inflation of the airbag through the aperture, the arrangement being **characterised in that** the aperture (14) is closed by an ornamental element (13) provided as an adornment to the trim member (8).

2. A safety arrangement according to claim 1, wherein the aperture (14) is closed solely by the ornamental element (13).

3. A safety arrangement according to claim 1 or claim 2, wherein the ornamental element (13) is connected to the trim member (8).

4. A safety arrangement according to claim 3, wherein the ornamental element (13) comprises a plurality of fixing tabs (16) configured for engagement within respective fixing apertures or recesses (15) provided on the trim member (8).

5. A safety arrangement according to claim 3 or claim 4, wherein the ornamental element (13) is either fixedly or releasably connected to the trim member (8).

6. A safety arrangement according to any preceding claim, wherein the ornamental element (13) is provided with a hinge (24) to permit at least part of the element to open pivotally upon inflation of the airbag.

7. A safety arrangement according to any preceding claim, wherein the ornamental element (13) comprises a region of relative mechanical weakness (25) which is configured to rupture upon inflation of the airbag.

8. A safety arrangement according to any preceding claim, wherein the ornamental element (13) has a different surface finish and/or colour to the trim member (8).

9. A safety arrangement according to any preceding claim, wherein the ornamental element (13) is larger than the aperture (14) such that it extends over at least one adjacent region of the interior trim member (8).

10. A safety arrangement according to any preceding claim provided in combination with an airbag module (11).

11. A safety arrangement according to claim 10, wherein the aperture (14) is sized to permit insertion of the airbag module (11) through the aperture during installation of the airbag module.

12. A safety arrangement according to claim 10 or claim 11, wherein the ornamental element (13) is connected to the airbag module (11).

13. A safety arrangement according to claim 12, wherein the ornamental element (13) comprises a plurality of fixing tabs (17) configured for engagement within respective fixing apertures or recesses (18) provided on the airbag module (11).

14. A safety arrangement according to claim 12 or claim 13, wherein the ornamental element (11) is either fixedly or releasably connected to the airbag module (11).

15. A safety arrangement according to any preceding claim, wherein the trim member (8) forms part of the dashboard (5) of the vehicle.
